# EUROPEAN PATENT SPECIFICATION

(11) **EP 3 334 219 B1**
(45) Date of publication and mention of the grant of the patent: **20.11.2019**
(21) Application number: 16207085.8
(22) Date of filing: 28.12.2016
(51) Int. Cl.: H04W 52/18

(54) **DATA TRANSMISSION METHOD AND BASE STATION DEVICE**
DATENÜBERTRAGUNGSVERFAHREN UND BASISSTATIONSVORRICHTUNG
PROCÉDÉ DE TRANSMISSION DE DONNÉES ET DISPOSITIF DE STATION DE BASE

(30) Priority: 08.12.2016 TW 105140643
(43) Date of publication of application: 13.06.2018
(73) Proprietor: Industrial Technology Research Institute, Chutung, Hsinchu 31040 (TW)
(72) Inventor: FANG, Shih-Hao, 302 Zhubei City, Hsinchu County (TW); HSU, Jen-Yuan, 893 Jincheng Township, Kinmen County (TW); HSIEH, Dung-Rung, 300 Hsinchu City (TW); LIN, Jing-Shiun, 404 Taichung City (TW)
(74) Representative: Krauns, Christian

(56) References cited:
- EP-A1- 2 389 026
- WO-A1-2014/024025
- WO-A2-2010/132754
- WO-A2-2012/145718
- WO-A2-2014/021759
- INTEL CORPORATION: "Clarifications and Design Requiremens for CoMP Scenarios 1-3", 3GPP DRAFT; R1-110973, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Taipei, Taiwan; 20110221, 15 February 2011 (2011-02-15), XP050490688, [retrieved on 2011-02-15]

## Description

### TECHNICAL FIELD

The disclosure relates to a data transmission method and a base station device.

### BACKGROUND

In response to future communication system requirements, establishing base stations in a high density is one effective means for achieving high data transmission rates. However, as the density of base stations increases, signal interference among signals also increases. Currently, a multi-cell coordination (MCC) technology is provided to solve the issue of signal interference among base stations. In the MCC technology, information such as channel conditions and transmission data are primarily shared to multiple base stations, and data is jointly transmitted by the base stations with coordination of the base stations, so as to effectively control signal interference among the base station to further enhance overall system performance.

However, the MCC technology usually relies on precise channel information, and is sometimes not available for end devices. Although there are end devices in a state adapted for the MCC technology, these end devices may not have access to services of more base stations due to a limited signal service range of base stations. These conditions are unfavorable for enhancing system performance.

The WO 2014/021759 A2 discloses a method for determining an offset to be used to extend the range of a first base station in a mobile communication network, the method comprising determining one or more characteristics of a mobile device; and determining an offset to be used to extend the range of the first base station from the one or more characteristics.

The WO 20127145718 A2 discloses methods and apparatuses that include calibrating transmit power of a femto node based on measuring one or more parameters related to usage of the femto node. The femto node can temporarily increase transmit power and analyse received measurement reports to determine a transmit power calibration. The femto node can additionally measure uplink received signal strength indicators over multiple time periods following handover of a user equipment to determine whether to increase transmit power to cover the user equipment.

WO 2014/024025 A1 discloses a method and an apparatus for managing CoMP related sets, which solve the problem of how to dynamically manage the CoMP related sets and send corresponding instructions to user equipments.

Therefore, there is a need for a data transmission technology that enhances the adaptivity for the MCC technology and improves system performance.

### SUMMARY

The object of the present invention is achieved by the features of the appended independent claims.

### BRIEF DESCRIPTION OF THE DRAWINGS

FIG. 1 is a flowchart of a data transmission method according to an embodiment of the present disclosure ;
FIG. 2 is a schematic diagram of a network configuration of multiple base station devices in a first mode;
FIG. 3 is schematic diagram of a network configuration of multiple base station devices switched to a second mode;
FIG. 4 is a schematic diagram of configuring different types of resources in a frequency domain;
FIG. 5 is a schematic diagram of configuring different types of resources in a time domain; and
FIG. 6 is a schematic diagram of configuring different types of resources according to a mixed method of a time domain and a frequency domain.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

### DETAILED DESCRIPTION

In the application, embodiments of the disclosure are described in detail with reference to the accompanying drawings. However, not all embodiments are depicted in these drawings. The disclosure may be implemented in different variations and is not limited to the disclosed embodiments. Further, the embodiments provided in the disclosure fully meet legal application requirements. The same reference denotations in the drawings represent identical or similar elements.

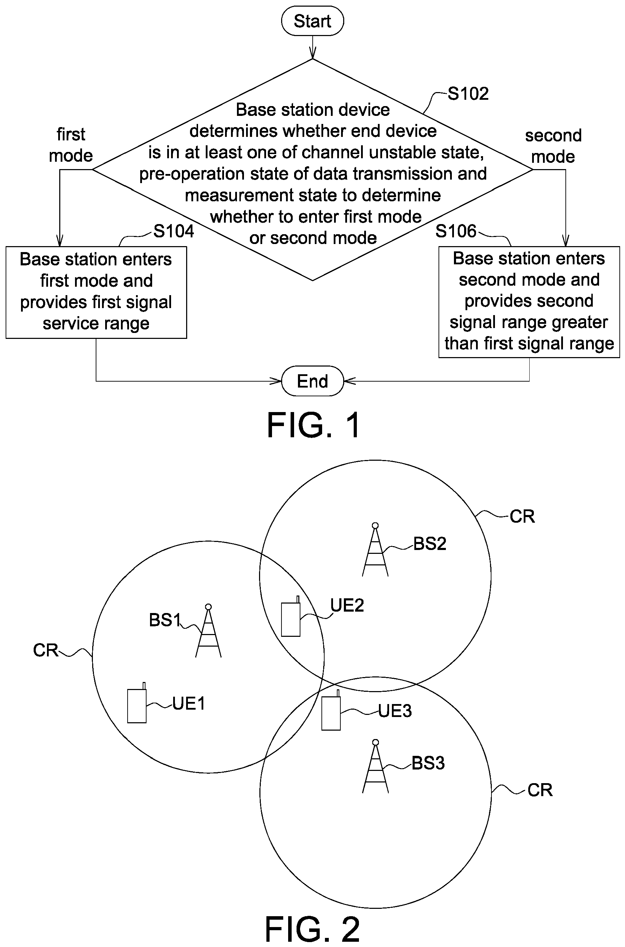

FIG. 1 shows a flowchart of a data transmission method according to an embodiment of the present disclosure. The data transmission method is adapted for a base station device, e.g., a base station equipment such as a macrocell, a microcell or a picocell. For example, the base station device may be realized by a computer or other electronic circuits with computation capabilities. For example, the base station device includes a memory and a processor. The processor is coupled to the memory, and is configured to perform the data transmission method of the embodiment.

In step S102, the base station device determines whether the end device is in at least one of an unstable channel state, a pre-operation state of data transmission and a measurement state according to report data of the end device to determine whether to enter a first mode or a second mode.

The base station device enters the first mode corresponding to common transmission when a determination result in step S102 is affirmative, or enters the second mode corresponding to enhanced multi-cell coordination (MCC) transmission when the determination result in step S102 is negative.

The report data includes at least one of, for example, a channel quality indicator (CQI), a signal-to-interference-plus-noise ratio (SINR), a signal-to-noise ratio (SNR), a received signal strength indicator (RSSI), a reference signal received quality (RSRQ), a reference signal received power (RSRP), a rank indicator (RI), and a distance between the end device and the base station device.

The base station device may directly send a signal to the end device to request the end device to provide the report data, or obtain the report data from the end device through sharing from other base station devices. After obtaining the report data of the end device, the base station device may determine to enter the first mode corresponding to common transmission or the second mode corresponding to MCC transmission according to a current usage state and/or channel information of the end device. The end device may be any user equipment, and may be connected to the network through establishing a wireless transmission link with the base station device.

The unstable channel state refers to a state with fast changes, large variations and/or uncertain variations. For example, the base station device may determine whether a channel is stable according to a coherent time or a coherent bandwidth. For example, when a channel change is greater than a coherent time, the base station device may determine that the end device is in an unstable channel state. In one embodiment, the base station device regards an end device that is in a high mobility and/or handover state as being in an unstable channel state.

Regarding the high mobility state, because the end device reports predetermined known data to the base station device in a fixed period to allow the base station device to measure the current channel conditions, the end device may be determined as being in the high mobility state when the base station device measures large changes in the channel conditions.

Regarding the handover state, if an end device is originally serviced by a base station device with however signal quality being poor, a backend network sends an instruction to the end device to request the end device to measure signal quality of another base station device, and to report a measured result. If the measured result indicates that the signal quality of another base station device is better, the end device performs handover and becomes services by another base station device.

The pre-operation state of data transmission refers to a preparatory process of the end device for transmitting user data to the base station device, e.g., a boot process.

Regarding the boot process, taking a Long-Term Evolution (LTE) system for example, when the end device performs functions such as cell search, physical broadcast channel (PBCH) or random access channel (RACH), the base station device may learn that, the end device is in a boot process and has not yet entered a state for transmitting user data. At this point, the base station device considers the end device being in a pre-operation state of data transmission.

The measurement state refers to a state in which the end device performs channel measurement. The base station device may send an instruction to the end device to request for a measurement state, and so the base station device may in principle learn whether the end device is in the measurement state. Because the base station device may increase its transmission power when performing MCC transmission, to prevent an incorrect channel measurement result of the end device, the end device in the measurement state may be regarded as an end device that is not adapted for MCC transmission.

In step S104, when the base station device enters the first mode corresponding to common transmission, the base station device provides a first signal service range. The first signal service range refers to a non-adjusted predetermined signal service range that the base station device provides, and data transmission that the base station device performs to the end device using the non-adjusted predetermined signal service range is the so-called common transmission. When common transmission is performed, the base station device may independently service an end device located within the first signal service range, or may service an end device located at an overlapping region jointly with other base station devices, depending on the communication configuration adopted.

In the first mode, multiple base station devices may be divided into multiple dynamically adjustable groups. Each of the groups may include one or multiple base station devices, and the base station devices in the same group use the same cell identity and use the same resources for transmission. Different groups may use different resources for data transmission, and so inter-cell interference (ICI) may be incurred. At this point, a base station device may use an interference coordination technology such as inter-cell interference coordination (ICIC), or enhanced ICIC (eICIC), further enhanced ICIC (FeICIC) to solve such interference issue.

In step S106, when the base station device enters the second mode, the base station device provides a second signal service range that is greater than the first signal service range. For example, when the base station device enters the second mode from the first mode, the base station device increases its transmission power to expand the first signal service range to the second signal service range.

The expansion of a signal service means implies that an even larger overlapping region maybe produced among signal service ranges of different base station devices. Thus, when the base station device operates in the second mode, the end device has a greater probability of being serviced by more base station devices and hence an increased probability of using MCC for transmission, or a greater probability of being serviced by a greater number of base station devices participating MCC transmission.

In the second mode, in addition to transmitting the same part of resources to one end device, multiple base station devices may also transmit the same part of resources to multiple end devices according to the multi-user multiple-input multiple-output (MU-MIMO) technology to enhance transmission efficiency.

In one embodiment, to prevent an inaccurate measurement result caused by the increased transmission power of the base station device, the base station device, in the second mode, transmits a measurement disable signal to the end device to prohibit the end device from performing signal measurement.

On the other hand, the base station device may repeatedly perform the data transmission method in FIG. 1, so as to determine the report data obtained at a next time point and to determine whether to switch to the first mode or the second mode.

FIG. 2 shows a schematic diagram of a network configuration of multiple base station devices in a first mode. In this embodiment, base station devices BS1, BS2 and BS3 have respective first signal service ranges CR. The base station devices BS1 and BS2 are from the same group (i.e., having the same cell identity) and jointly service an end device UE2, the base station device BS3 is from another group and services an end device UE3, and an end device UE1 is independently serviced by the base station device BS1. It should be noted that, the network configuration in the drawing is for illustration purposes rather than a limitation to the disclosure. The numbers and configurations of the base station devices and end devices (e.g., the numbers of the groups, the numbers of base station devices in each of the groups, and the respective numbers of the end devices serviced) may be dynamically adjusted as desired according to actual network environments.

The end devices UE1 to UE3 provides the base station devices BS1 to BS3 with report data for the base station devices BS1 to BS3 to determine whether to switch from the first mode to the second mode. It should be noted that, in addition to directly receiving the report data from the serviced end devices, the base station devices BS1 to BS3 may also obtain the report data of the end devices serviced by other base station devices through a backend network and from connections among the base station devices. In other words, the base station devices BS1 to BS3 may detect the overall network configuration by a direct or indirect means. For example, in addition to directly obtaining the report data of the end devices UE1 and UE2 serviced, the base station device B1 may also obtain the report data of the end device UE3 through the sharing from the base station device BS3 to determine whether to switch to the second mode.

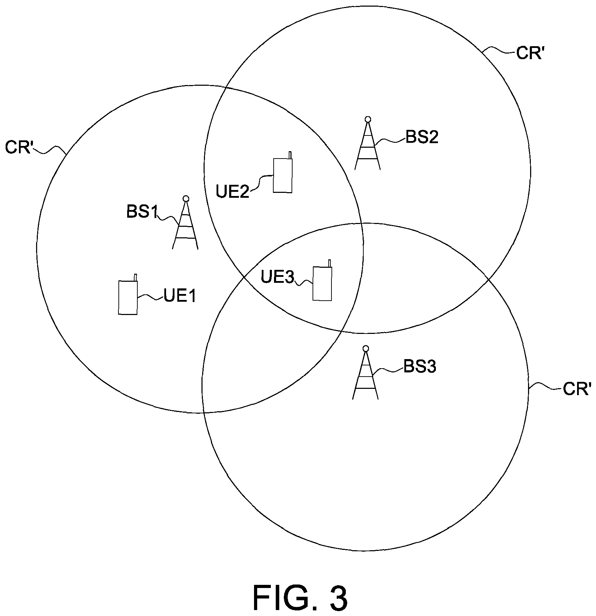

FIG. 3 shows a schematic diagram of a network configuration of the base station devices BS1 to BS3 in FIG. 3 switched to a second mode. In this embodiment, the report data of the end device UE3 is further directly or indirectly provided to the base station devices BS1 to BS3, and indicates that the end device UE3 is currently in a state adapted for MCC transmission, e.g., having completed the handover, boot process or measurement state. In response to the report data of the end device UE3, the base station devices BS1 to BS3 switch to the second mode, and increase respective transmission energies to expand respective original first signal service ranges CR to respective second signal service ranges CR'.

In the second mode, the base station devices BS1 and BS2 coordinate with the base station device BS3 originally from a different group, so as to jointly transmit data to the end device UE3 using MCC transmission. Next, the end device UE3 receives the same set of data transmitted from the base station devices BS1 to BS3, hence obtaining a higher data transmission rate.

For transmission resources used by the base station devices, in the first mode, the end device UE3 is designated with first-type resources involving M base station devices (M=1 in this example, i.e., the base station device BS3); in the second mode, the end device UE3 is designated with second-type resources of N base station devices (N=3 in this example, i.e., the base station devices BS1 to BS3), where M and N are positive integers and N is greater than M. With the above method, the base station devices may adaptively switch to the second mode to increase the probability that the end devices use MCC transmission to further obtain a higher data transmission rate.

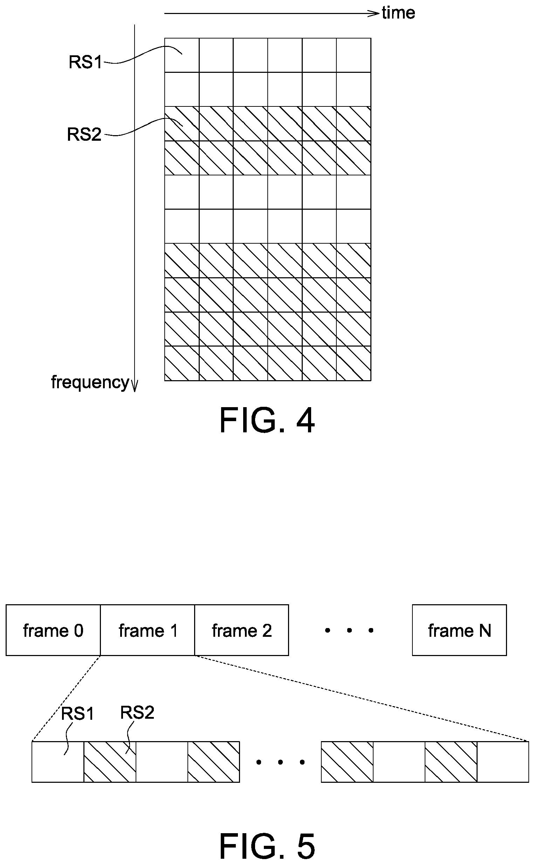

According to an embodiment, a base station device may allot first-type resources corresponding to the first mode and second-type resources corresponding to the second mode in the frequency-domain and/or the time-domain to transmit data to an end device. Associated details are given with reference to FIG. 4 to FIG. 6.

FIG. 4 shows a schematic diagram of configuring different types of resources in the frequency domain. In FIG. 4, each grid represents time-frequency resources of one unit, wherein the time-domain resources may be divided according to any time unit (e.g., a frame time length), and the frequency-domain resources may be divided according to any frequency unit (e.g., a sub-carrier band).

A base station device may configure a first band as a first-type resource RS1 (represented by non-shaded grids) to adapt to data transmission of the first mode, and a second band may be configured as a second-type resource RS2 (represented by shaded grids) to adapt to transmission of the second mode.

If the base station device determines that the end device is adapted for MCC transmission, the base station device transmits data to end device using the first-type resource RS1, otherwise the base station device transmits data to the end device using the second-type resource RS2.

It should be noted that, the methods for configuring resources are for illustration purposes only and are construed as limitations. The ranges and numbers of the bands covered by the first-type resource RS1 and the second-type resource RS2 may be determined based on actual applications.

FIG. 5 shows a schematic diagram of configuring different types of resources in the time domain. Main differences of the embodiment in FIG. 5 from that in FIG. 4 are that, a base station device configures a first time interval as the first-type resource RS1 adapted for transmission of the first mode, and configures a second time interval as the second-type resource RS2 adapted for data transmission of the second mode.

As shown in FIG. 5, one frame (e.g., a frame 1) is divided into multiple sub-frames. A part of the sub-frames are configured as the first-type resource RS1 (represented by non-shaded rectangles), and the other part of sub-frames are configured as the second-type resources RS2 (represented by shaded rectangles).

In one embodiment, the first time interval configured as the first-type resource RS1 may be realized by non-almost blank sub-frames (non-ABS) in the LTE technology, and the second time interval configured as the second-type resources RS2 may be realized by almost blank sub-frames (ABS).

It should be noted that, the method for configuring resources in FIG. 5 serves for illustration purposes and is not to be construed as a limitation. The ranges and numbers of the time intervals covered by the first-type resource RS1 and the second-type resource RS2 may be determined based on actual applications.

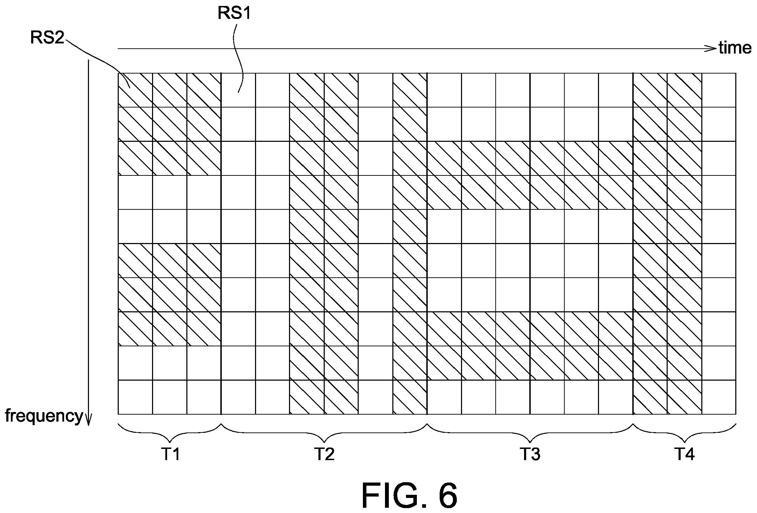

FIG. 6 shows a schematic diagram of configuring different types of resources by a method of mixing the time domain and the frequency domain. In this example, a base station device configures a first time interval and a first band as the first-type resource RS1, and configures a second time interval and a second band as the second-type resource RS2.

As shown in FIG. 6, in some time periods (e.g., time periods T1 and T3), the base station device adopts the frequency-division method in FIG. 4 to configure the first-type resource RS1 and the second-type resource RS2; in other time periods (e.g., time periods T2 and T4), the base station device adopts the time-division method in FIG. 5 to configure the first-type resource RS1 and the second-type resource RS2.

It should be noted that, the method for configuring resources in FIG. 6 serves for illustration purposes and is not to be construed as a limitation. The ratios of time-frequency resources respectively occupied by the first-type resource RS1 and the second-type resource RS2 may be in any values, and may be dynamically adjusted.

The disclosure may be realized by a non-transitory computer-readable medium including an instruction sequence. The instruction sequence, when executed by a processor, causes a computer system to perform the data transmission method of the disclosure. The instruction sequence may be implemented through any computer language (including mechanical, combinational, high-tier process, logic or object-oriented configuring language) to communicate with the computer system. When the non-transitory computer-readable medium (e.g., a hard drive or a magnetic disk) is read by the computer system, the computer system performs a predetermined process, e.g., the data transmission method of the disclosure.

In conclusion, the data transmission method, base station device and non-transitory computer-readable medium disclosed are capable of dynamically switching between a first mode and a second mode according to report data of an end device. When the report data of the end device indicates that the end device is not adapted for MCC transmission, the base station device enters a first mode to maintain the original signal service range and adopts common data transmission. Conversely, when the report data of the end device indicates that the end device is adapted for MCC transmission, the base station device enters a second mode and expands its signal service range to increase the probability that the end device is serviced by MCC.

It will be apparent to those skilled in the art that various modifications and variations can be made to the disclosed embodiments. It is intended that the specification and examples be considered as exemplary only, with a true scope of the disclosure being indicated by the following claims.

## Claims

1. A data transmission method, adapted for a base station device (BS1, BS2, BS3), wherein the data transmission method comprises:
determining (S102) whether an end device (UE1, UE2, UE3) is in at least one of a pre-operation state of data transmission and a measurement state according to report data of the end device (UE1, UE2, UE3);
if so, entering a first mode (S104) to provide a first signal service range (CR); and
if not, entering a second mode (S106) to provide a second signal service range (CR') greater than the first signal service range (CR), and
in the second mode, transmitting a measurement disable signal to the end device (UE1, UE2, UE3) to disable the end device (UE1, UE2, UE3) from a signal measurement,
wherein the report data comprises at least one of completed boot process state or measurement state of the end devices (UE1, UE2, UE3).

2. The data transmission method according to claim 1, further comprising:
increasing an transmission power to expand the first signal service range (CR) to the second signal service range (CR') when entering from the first mode to the second mode.

3. The data transmission method according to claim 1 or 2, further comprising:
in the first mode, transmitting data to the end device (UE1, UE2, UE3) by using a first-type resource (RS1); and
in the second mode, transmitting data to the end device (UE1, UE2, UE3) by using a second-type resource (RS2);
wherein, the first-type resource involves data transmission of M base station devices (BS1, BS2, BS3) to the end device (UE1, UE2, UE3), the second-type resource involves data transmission of N base station devices (BS1, BS2, BS3) to the end device (UE1, UE2, UE3), M and N are positive integers, and N is greater than M.

4. The data transmission method according to claim 3, further comprising:
configuring a first band or a first time interval as the first-type resource (RS1); and
configuring a second band or a second time interval as the second-type resource (RS2).

5. The data transmission method according to claim 4, wherein the first time interval is a non-almost blank sub-frame, and the second time interval is an almost blank sub-frame.

6. The data transmission method according to claim 3, further comprising:
configuring a first time interval and a first band as the first-type resource (RS1); and
configuring a second time interval and a second band as the second-type resource (RS2).

7. A base station device (BS1, BS2, BS3), wherein the base station device (BS1, BS2, BS3) comprises:
a memory; and
a processor, coupled to the memory, configured to:
determine (S102) whether an end device (UE1, UE2, UE3) is in at least one of a pre-operation state of data transmission and a measurement state according to report data of the end device (UE1, UE2, UE3);
if so, enter a first mode (S104) to provide a first signal service range (CR); and
if not, enter a second mode (S106) to provide a second signal service range (CR') greater than the first signal service range (CR), wherein the processor is further configured to in the second mode, transmit a measurement disable signal to the end device (UE1, UE2, UE3) to disable the end device (UE1, UE2, UE3) from performing signal measurement,
wherein the report data comprises at least one of completed boot process state or measurement state of the end devices (UE1, UE2, UE3).

8. The base station device (BS1, BS2, BS3) of claim 7, wherein when the base station device (BS1, BS2, BS3) enters the second mode, the base station device (BS1, BS2, BS3) increases a transmission power to provide the second signal service range (CR').

9. The base station device (BS1, BS2, BS3) of claim 7 or 8, wherein when the base station (BS1, BS2, BS3) device enters the first mode, the base station device (BS1, BS2, BS3) transmits data to the end device (UE1, UE2, UE3) by using a first-type resource (RS1); when the base station device (BS1/BS2/BS3) enters the second mode, the base station device (BS1, BS2, BS3) transmits data to the end device (UE1, UE2, UE3) using a second-type resource (RS2);
wherein, the first-type resource (RS1) involves data transmission of M base station devices (BS1, BS2, BS3) to the end device (UE1, UE2, UE3), the second-type resource (RS2) involves data transmission of N base station devices (BS1, BS2, BS3) to the end device (UE1, UE2, UE3), M and N are positive integers, and N is greater than M.

10. The base station device (BS1, BS2, BS3) of claim 9, wherein the processor further:
configures a first band or first time interval as the first-type resource (RS1); and
configures a second band or a second time interval as the second-type resource (RS2).

11. The base station device (BS1, BS2, BS3) of claim 10, wherein the first time interval is a non-almost blank sub-frame, and the second time interval is an almost blank sub-frame.

12. The base station device (BS1, BS2, BS3) of claim 9, wherein the processor further:
configures a first time interval and a first band as the first-type resource (RS1); and
configures a second time interval and a second band as the second-type resource (RS2).

## Patentansprüche

1. Datenübertragungsverfahren, das für eine Basisstationsvorrichtung (BS1, BS2, BS3) angepasst ist, wobei das Datenübertragungsverfahren umfasst:
ein Bestimmen (S102), ob sich ein Endgerät (UE1, UE2, UE3) in mindestens einem von einem Vorbereitungszustand der Datenübertragung und / oder einem Messzustand nach Berichtsdaten des Endgeräts (UE1, UE2, UE3) befindet,
wenn dies zutrifft, ein Eintreten in einen ersten Modus (S104), um einen ersten Signaldienstbereich (CR) bereitzustellen, und
wenn dies nicht zutrifft, ein Eintreten in einen zweiten Modus (S106), um einen zweiten Signaldienstbereich (CR') bereitzustellen, der größer als der erste Signaldienstbereich (CR) ist, und
in dem zweiten Modus, ein Übertragen eines Messungssperrsignals an das Endgerät (UE1, UE2, UE3), um das Endgerät (UE1, UE2, UE3) von einer Signalmessung zu sperren,
wobei die Berichtsdaten mindestens eines von einem abgeschlossenen Startprozesszustand oder einem Messzustand der Endgeräte (UE1, UE2, UE3) aufweisen.

2. Datenübertragungsverfahren nach Anspruch 1, welches ferner umfasst:
ein Erhöhen einer Sendeleistung, um den ersten Signaldienstbereich (CR) auf den zweiten Signaldienstbereich (CR') zu erweitern, wenn von dem ersten Modus in den zweiten Modus gewechselt wird.

3. Datenübertragungsverfahren nach Anspruch 1 oder 2, welches ferner umfasst:
in dem ersten Modus, ein Übertragen von Daten an das Endgerät (UE1, UE2, UE3) unter Verwendung einer Ressource vom ersten Typ (RS1), und
in dem zweiten Modus, ein Übertragen von Daten an das Endgerät (UE1, UE2, UE3) unter Verwendung einer Ressource vom zweiten Typ (RS2),
wobei die Ressource vom ersten Typ die Datenübertragung von M Basisstationsgeräten (BS1, BS2, BS3) an das Endgerät (UE1, UE2, UE3) betrifft, wobei die Ressource vom zweiten Typ die Datenübertragung von N Basisstationsgeräten (BS1, BS2, BS3) an das Endgerät (UE1, UE2, UE3) betrifft, wobei das M und das N positive ganze Zahlen sind und das N größer als das M ist.

4. Datenübertragungsverfahren nach Anspruch 3, welches ferner umfasst:
ein Konfigurieren eines ersten Bandes oder eines ersten Zeitintervalls als die Ressource vom ersten Typ (RS1), und
ein Konfigurieren eines zweiten Bands oder eines zweiten Zeitintervalls als die Ressource vom zweiten Typ (RS2).

5. Datenübertragungsverfahren nach Anspruch 4, wobei das erste Zeitintervall ein nicht fast leerer Teilrahmen ist und das zweite Zeitintervall ein fast leerer Teilrahmen ist.

6. Datenübertragungsverfahren nach Anspruch 3, welches ferner umfasst:
ein Konfigurieren eines ersten Zeitintervalls und eines ersten Bands als die Ressource vom ersten Typ (RS1), und
ein Konfigurieren eines zweiten Zeitintervalls und eines zweiten Bands als die Ressource vom zweiten Typ (RS2).

7. Basisstationsvorrichtung (BS1, BS2, BS3), wobei die Basisstationsvorrichtung (BS1, BS2, BS3) aufweist:
einen Speicher, und
einen Prozessor, der mit dem Speicher verbunden ist und der ausgestaltet ist, um:
zu bestimmen (S102), ob sich ein Endgerät (UE1, UE2, UE3) in mindestens einem von einem Vorbereitungszustand der Datenübertragung und / oder einem Messzustand nach Berichtsdaten des Endgeräts (UE1, UE2, UE3) befindet,
wenn dies zutrifft, in einen ersten Modus (S104) einzutreten, um einen ersten Signaldienstbereich (CR) bereitzustellen, und
wenn dies nicht zutrifft, in einen zweiten Modus (S106) einzutreten, um einen zweiten Signaldienstbereich (CR') bereitzustellen, der größer als der erste Signaldienstbereich (CR) ist, wobei der Prozessor ferner dazu ausgestaltet ist
in dem zweiten Modus ein Messungssperrsignal an das Endgerät (UE1, UE2, UE3) zu senden, um zu verhindern, dass das Endgerät (UE1, UE2, UE3) eine Signalmessung durchführt,
wobei die Berichtsdaten mindestens eines von einem abgeschlossenen Startprozesszustand oder einem Messzustand der Endgeräte (UE1, UE2, UE3) aufweisen.

8. Basisstationsvorrichtung (BS1, BS2, BS3) nach Anspruch 7, wobei, wenn die Basisstationsvorrichtung (BS1, BS2, BS3) in den zweiten Modus eintritt, die Basisstationsvorrichtung (BS1, BS2, BS3) eine Sendeleistung erhöht, um den zweiten Signaldienstbereich (CR') bereitzustellen.

9. Basisstationsvorrichtung (BS1, BS2, BS3) nach Anspruch 7 oder 8, wobei, wenn die Basisstationsvorrichtung (BS1, BS2, BS3) in den ersten Modus eintritt, die Basisstationsvorrichtung (BS1, BS2, BS3) Daten an das Endgerät (UE1, UE2, UE3) unter Verwendung einer Ressource vom ersten Typ (RS1) überträgt, und wenn das Basisstationsgerät (BS1, BS2, BS3) in den zweiten Modus eintritt, das Basisstationsgerät (BS1, BS2, BS3) Daten an das Endgerät (UE1, UE2, UE3) unter Verwendung einer Ressource vom zweiten Typ (RS2) überträgt,
wobei die Ressource vom ersten Typ (RS1) die Datenübertragung von M Basisstationsgeräten (BS1, BS2, BS3) an das Endgerät (UE1, UE2, UE3) betrifft, wobei die Ressource vom zweiten Typ (RS2) die Datenübertragung von N Basisstationsgeräte (BS1, BS2, BS3) an das Endgerät (UE1, UE2, UE3) betrifft, wobei das M und das N positive ganze Zahlen sind und das N größer als das M ist.

10. Basisstationsvorrichtung (BS1, BS2, BS3) nach Anspruch 9, wobei der Prozessor ferner:
ein erstes Band oder ein erstes Zeitintervall als die Ressource vom ersten Typ (RS1) konfiguriert, und
ein zweites Band oder ein zweites Zeitintervall als die Ressource vom zweiten Typ (RS2) konfiguriert.

11. Basisstationsvorrichtung (BS1, BS2, BS3) nach Anspruch 10, wobei das erste Zeitintervall ein nicht fast leerer Teilrahmen ist und das zweite Zeitintervall ein fast leerer Teilrahmen ist.

12. Basisstationsvorrichtung (BS1, BS2, BS3) nach Anspruch 9, wobei der Prozessor ferner:
ein erstes Zeitintervall und ein erstes Band als die Ressource vom ersten Typ (RS1) konfiguriert, und
ein zweites Zeitintervall und ein zweites Band als die Ressource vom zweiten Typ (RS2) konfiguriert.

## Revendications

1. Procédé de transmission de données, adapté pour un dispositif de station de base (BS1, BS2, BS3), dans lequel le procédé de transmission de données comprend :
le fait de déterminer (S102) si un dispositif terminal (UE1, UE2, UE3) est dans au moins l'un d'un état de préfonctionnement de transmission de données et d'un état de mesure selon des données de rapport du dispositif terminal (UE1, UE2, UE3) ;
dans l'affirmative, l'entrée dans un premier mode (S104) pour fournir une première plage de service de signal (CR) ; et
dans la négative, l'entrée dans un second mode (S106) pour fournir une seconde plage de service de signal (CR') plus grande que la première plage de service de signal (CR), et
dans le second mode, la transmission d'un signal d'invalidation de mesure au dispositif terminal (UE1, UE2, UE3) pour invalider le dispositif terminal (UE1, UE2, UE3) à partir d'une mesure de signal,
dans lequel les données de rapport comprennent au moins l'un d'un état de processus d'amorce achevé ou d'un état de mesure des dispositifs terminaux (UE1, UE2, UE3).

2. Procédé de transmission de données selon la revendication 1, comprenant en outre :
l'augmentation d'une puissance de transmission pour étendre la première plage de service de signal (CR) à la seconde plage de service de signal (CR') lors de l'entrée depuis le premier mode dans le second mode.

3. Procédé de transmission de données selon la revendication 1 ou 2, comprenant en outre :
dans le premier mode, la transmission de données au dispositif terminal (UE1, UE2, UE3) par l'utilisation d'une ressource de premier type (RS1) ; et
dans le second mode, la transmission de données au dispositif terminal (UE1, UE2, UE3) par l'utilisation d'une ressource de second type (RS2) ;
dans lequel, la ressource de premier type implique une transmission de données de M dispositifs de station de base (BS1, BS2, BS3) au dispositif terminal (UE1, UE2, UE3), la ressource de second type implique la transmission de données de N dispositifs de station de base (BS1, BS2, BS3) au dispositif terminal (UE1, UE2, UE3), M et N sont des entiers positifs, et N est plus grand que M.

4. Procédé de transmission de données selon la revendication 3, comprenant en outre :
la configuration d'une première bande ou d'un premier intervalle de temps en tant que ressource de premier type (RS1) ; et
la configuration d'une seconde bande ou d'un second intervalle de temps en tant que ressource de second type (RS2).

5. Procédé de transmission de données selon la revendication 4, dans lequel le premier intervalle de temps est une non-sous-trame presque vide, et le second intervalle de temps est une sous-trame presque vide.

6. Procédé de transmission de données selon la revendication 3, comprenant en outre :
la configuration d'un premier intervalle de temps et d'une première bande en tant que ressource de premier type (RS1) ; et
la configuration d'un second intervalle de temps et d'une seconde bande en tant que ressource de second type (RS2).

7. Dispositif de station de base (BS1, BS2, BS3), le dispositif de station de base (BS1, BS2, BS3) comprenant :
une mémoire ; et
un processeur, couplé à la mémoire, configuré pour :
déterminer (S102) si un dispositif terminal (UE1, UE2, UE3) est dans au moins l'un d'un état de préfonctionnement de transmission de données et d'un état de mesure selon des données de rapport du dispositif terminal (UE1, UE2, UE3) ;
dans l'affirmative, entrer dans un premier mode (S104) pour fournir une première plage de service de signal (CR) ;
et
dans la négative, entrer dans un second mode (S106) pour fournir une seconde plage de service de signal (CR') plus grande que la première plage de service de signal (CR), dans lequel le processeur est en outre configuré pour
dans le second mode, transmettre un signal d'invalidation de mesure au dispositif terminal (UE1, UE2, UE3) pour invalider le dispositif terminal (UE1, UE2, UE3) quant à la réalisation d'une mesure de signal,
dans lequel les données de rapport comprennent au moins l'un d'un état de processus d'amorce achevé ou d'un état de mesure des dispositifs terminaux (UE1, UE2, UE3).

8. Dispositif de station de base (BS1, BS2, BS3) selon la revendication 7, dans lequel, lorsque le dispositif de station de base (BS1, BS2, BS3) entre dans le second mode, le dispositif de station de base (BS1, BS2, BS3) augmente une puissance de transmission pour fournir la seconde plage de service de signal (CR').

9. Dispositif de station de base (BS1, BS2, BS3) selon la revendication 7 ou 8, dans lequel, lorsque le dispositif de station de base (BS1, BS2, BS3) entre dans le premier mode, le dispositif de station de base (BS1, BS2, BS3) transmet des données au dispositif terminal (UE1, UE2, UE3) par l'utilisation d'une ressource de premier type (RS1) ; lorsque le dispositif de station de base (BS1/BS2/BS3) entre dans le second mode, le dispositif de station de base (BS1, BS2, BS3) transmet des données au dispositif terminal (UE1, UE2, UE3) à l'aide d'une ressource de second type (RS2) ;
dans lequel, la ressource de premier type (RS1) implique une transmission de données de M dispositifs de station de base (BS1, BS2, BS3) au dispositif terminal (UE1, UE2, UE3), la ressource de second type (RS2) implique la transmission de données de N dispositifs de station de base (BS1, BS2, BS3) au dispositif terminal (UE1, UE2, UE3), M et N sont des entiers positifs, et N est plus grand que M.

10. Dispositif de station de base (BS1, BS2, BS3) selon la revendication 9, dans lequel le processeur en outre :
configure une première bande ou un premier intervalle de temps en tant que ressource de premier type (RS1) ; et
configure une seconde bande ou un second intervalle de temps en tant que ressource de second type (RS2).

11. Dispositif de station de base (BS1, BS2, BS3) selon la revendication 10, dans lequel le premier intervalle de temps est une non-sous-trame presque vide, et le second intervalle de temps est une sous-trame presque vide.

12. Dispositif de station de base (BS1, BS2, BS3) selon la revendication 9, dans lequel le processeur en outre :
configure un premier intervalle de temps et une première bande en tant que ressource de premier type (RS1) ; et
configure un second intervalle de temps et une seconde bande en tant que ressource de second type (RS2).
